# EUROPEAN PATENT SPECIFICATION

(11) **EP 0 646 745 B1**
(45) Date of publication and mention of the grant of the patent: **12.11.1997**
(21) Application number: 94307106.8
(22) Date of filing: 28.09.1994
(51) Int. Cl.: F16K 37/00, G01F 1/00

(54) **Ball valve assembly**
Kugelhahn
Robinet à tournant sphérique

(30) Priority: 01.10.1993 GB 9320238
(43) Date of publication of application: 05.04.1995
(73) Proprietor: BTR plc, London SW1P 2PL (GB)
(72) Inventor: Hollingworth, Keith Jeffery, Telford, Shropshire TF7 4DW (GB)
(74) Representative: Treves, Barry William

(56) References cited:
- EP-A- 0 063 010
- DE-A- 3 608 296
- US-A- 5 193 780

## Description

This invention relates to a ball valve assembly.

A ball valve assembly typically has a ball supported in a valve body. The ball has a port, which in the open position of the valve, communicates with an inlet and an outlet in the body. At one position a drive shaft extends through the valve body and drivably connects the ball to a valve actuator. Rotation of the shaft by the actuator causes rotation of the ball through a predetermined angle of e.g. 90° between open and closed positions.

In order to determine or monitor the position of the ball it is known to provide a sensor with an indicator associated with the actuator. However, sometimes because of wear, damage or other causes, the position of the ball is not accurately sensed or indicated. Further even though the ball may be in the closed position, leakage may occur, again due to wear, damage or other causes.

EP-A- 0 063 010 discloses a ball valve assembly comprising a valve body having a passageway therethrough for flow of medium, a ball rotatably mounted within the body, adapted to block said passageway in a closed condition of the valve, and having a port adapted to be in communication with said passageway in an open condition of the valve, further comprising a signal emitter connected to or associated with the valve body, and capable of emitting a (radioactive) signal which will pass through the port when the ball is in one of the open and closed positions, but will be reflected from the ball when the ball is in the other of the open and closed positions, and a signal receiver provided to receive the signal after passing through the port.

The assembly according to Claim 1 differs from that disclosed in EP-A-0 063 010 in that the receiver is an ultra sound receiver which may detect an ultrasonic signal from within the valve. The assembly according to Claim 4 differs from that disclosed in EP-A-0 063 010 in addition to the aforementioned features in the sense that the emitter is an ultra sound emitter and in that the receiver may also receive the signal having been reflected from the ball.

Both arrangements of the invention allow not only the exact determination of the position of the ball but also the detection of a leakage although the valve is effectively in its closed position. The assembly disclosed in EP-A-0 063 010 deals only with the first aspect, i.e. the accurate determination of the position of the ball, but is completely silent on any possibility for detecting leakage e.g. through the closed ball valve.

In accordance with a first aspect of the invention a ball valve assembly comprises a valve body having a passageway therethrough for flow of medium, a ball rotatably mounted within the body, adapted to block said passageway in a closed condition of the valve, and having a port adapted to be in communication with said passageway in an open condition of the valve, and a signal receiver characterised in that the signal receiver is an ultra sound receiver capable of detecting an ultrasonic signal from within the valve body.

The ultrasonic signal may be generated by medium within the valve e.g. when leaking past the ball and/or a seal associated with the ball. Alternatively the signal may originate from an ultra sound emitter connected to or associated with the valve, and subsequently passing through or reflected from within the valve or a component thereof.

In accordance with a second aspect of the invention a ball valve assembly comprises a valve body having a passageway therethrough for flow of medium, a ball rotatably mounted within the body, adapted to block said passageway in a closed condition of the valve, and having a port adapted to be in communication with said passageway in an open condition of the valve, a signal emitter connected to or associated with the valve body, capable of emitting a signal which will pass through the port when the ball is in one of the open and closed positions, but will be reflected from the ball when the ball is in the other of the open and closed positions, and a signal receiver characterised in that the signal emitter is an ultra sound emitter capable of receiving the ultrasonic signal after passing through the port or having been reflected from the ball.

The emitter and receiver may be housed in a single unit attached to the exterior of the valve body, the receiver receiving a signal which has been reflected from the valve body or the ball.

One embodiment of the invention will now be described by way of 2example only with reference to the accompanying drawings of which:
- Figure 1: shows a cross-section through a ball valve in a closed condition; and
- Figure 2: shows a similar cross-section through the ball valve of Figure 1, in an open condition.

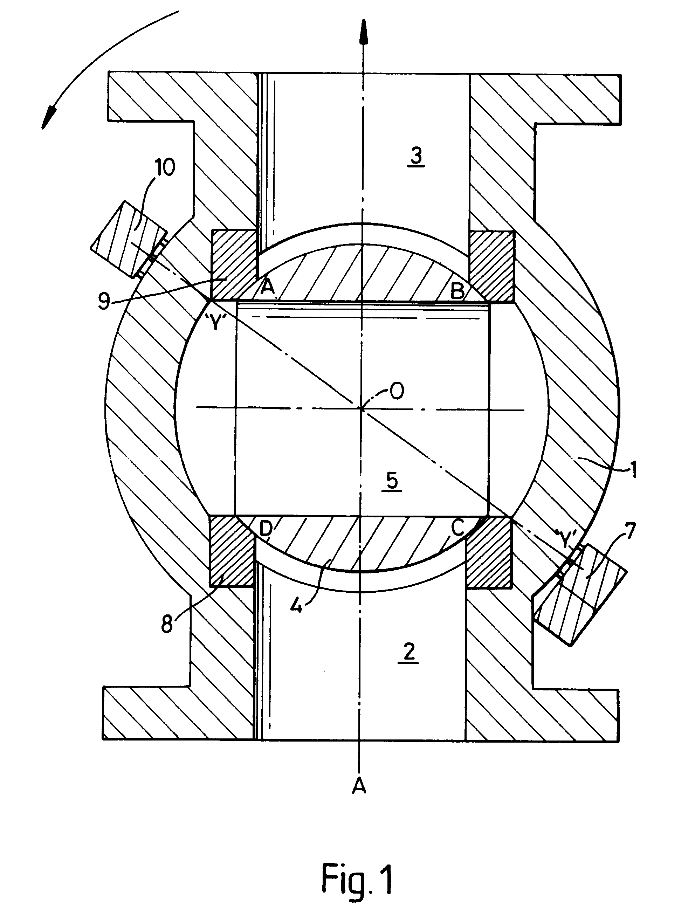

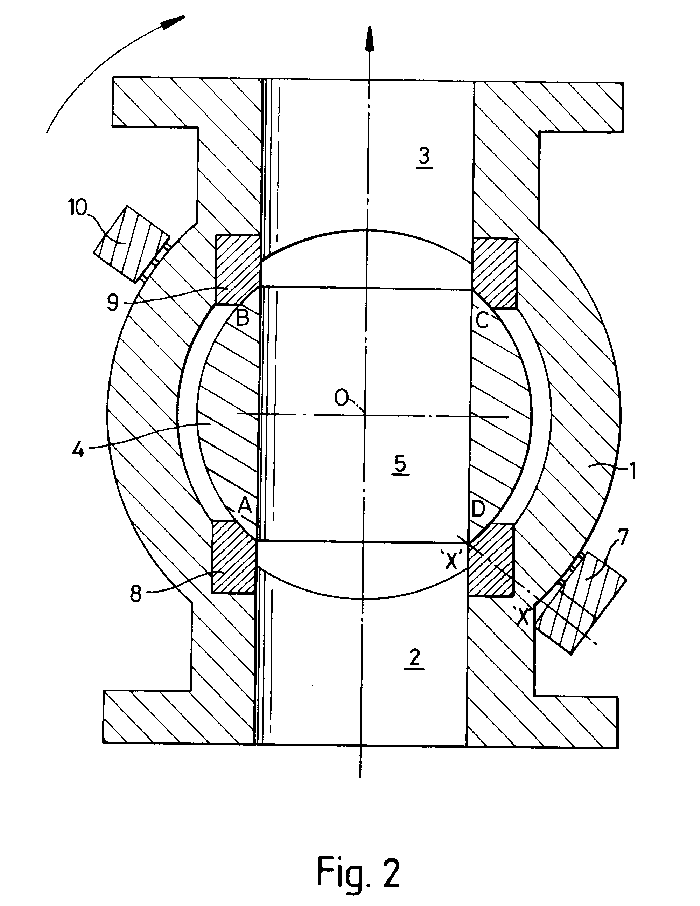

As shown in Figures 1 and 2 the valve assembly comprises a valve body 1 having an inlet 2 and an outlet 3, and a ball which has a port 5 therethrough. In the open condition of the valve as shown in Figure 2 the port 5 connects the inlet 2 to the outlet 3 but in the closed condition the ball prevents medium flowing from the inlet to the outlet. A combined ultrasound emitter and receiver unit 7 is mounted externally of the valve body 1 at the position shown in each figure. Optionally an ultrasound receiver unit 10 is mounted diametrically opposite the unit 7.

The ball 4 of the valve is of generally conventional construction and is positioned between two seals 8 and 9 which surround the inner extremities of the inlet 2 and the outlet 3 respectively. The ball is rotatable about an axis O by means of a drive shaft (not shown) connected to an actuator (not shown). The combined emitter and receiver unit 7 and the receiver unit 10 are each enclosed within their own rugged housings attached to the outside of the valve body 1 such as to be in intimate contact with the external surface thereof. To this end each housing is equipped with three equidistantly spaced legs (not shown) which enable stable contact between each housing and the body to be made. Any gap between one of the housings and the surface of the valve body may be filled with a gel or grease which will improve the transmission of ultrasound. Each unit housing is attached to the valve housing in a manner which eliminates independent movement e.g. by means of screws, straps or by adhesive bonding or welding.

In use of the assembly the ultrasound emitter directs a signal into the valve so as to pass perpendicularly across the axis of rotation 0 of the ball through the port 5 when the valve is in the closed condition, to be reflected back across the same path by the interior surface of the valve body, the reflected signal being detected by the receiver of unit 7. If the valve is in the open condition as shown in Figure 2 the beam will be reflected from the ball, the distance travelled being much shorter than when the ball is in the closed condition. This difference will be detected by the receiver and an indication of the ball position given. If the optional unit 10 is present, the signal which passes through the port when the valve is in the open condition will have a part which is not reflected back but which passes through the valve body to be detected by the unit 10. When the valve is in the open position the strength of the signal received by the unit 10 is much less, part of the original emitted signal having been reflected by the ball and by the interior surface of the valve body.

The receiver units may also detect a signal generated by any medium leaking past one of the seals and/or the ball when the valve is in the closed condition due for example to damage or wear.

Thus the assembly described may be used in two ways.

Firstly, when the valve is in the fully closed or fully open condition the received signals vary substantially from those received when the valve is partially open or partially closed. Thus the ball position may be accurately monitored.

Secondly, the noise i.e. an ultrasonic signal created by turbulence of medium in the valve during opening and/or closing may be detected by either or both receiver units to indicate whether the valve is (a) fully open, (b) fully closed or (c) leaking. A good i.e. non-leaking, valve will stop the flow of medium before the ball is rotated completely to the fully closed position (e.g. the ball may move a further 10° to the fully closed position), and the receiver signal may be used to monitor the ball position and/or whether there is a leak.

## Claims

1. A ball valve assembly comprising a valve body (1) having a passageway (2 and 3) therethrough for flow of medium, a ball (4) rotatably mounted within the body (1), adapted to block said passageway (2 and 3) in a closed condition of the valve, and having a port (5) adapted to be in communication with said passageway (2 and 3) in an open condition of the valve, and a signal receiver, characterised in that the signal receiver is an ultra sound receiver (7 or 10) capable of detecting an ultrasonic signal from within the valve body (1).

2. A ball valve assembly according to Claim 1, characterised in that the ultrasonic signal is generated by medium within the valve body (1).

3. A ball valve assembly according to Claim 1 characterised by comprising an ultra sound emitter (7), from which the ultrasonic signal originates, said emitter (7) being connected to or associated with the valve body (1).

4. A ball valve assembly comprising a valve body (1) having a passageway (2 and 3) therethrough for flow of medium, a ball (4) rotatablv mounted within the body (1), adapted to block said passageway in a closed condition of the valve, and having a port (5) adapted to be in communication with said passageway (2 and 3) in an open condition of the valve, a signal emitter connected to or associated with the valve body (1), capable of emitting a signal which will pass through the port (5) when the ball (4) is in one of the open and closed positions, but will be reflected from the ball (4) when the ball (4) is in the other of the open and closed positions, and a signal receiver characterised in that the signal emitter is an ultra sound emitter (7) capable of emitting an ultrasonic signal and the signal receiver is an ultra sound receiver (7 or 10) capable of receiving the ultrasonic signal after passing through the port (5) or having been reflected from the ball (4).

5. A ball valve assembly according to Claim 4 characterised in that the emitter and receiver are housed in a single unit (7) attached to the valve body (1).

6. A ball valve assembly according to Claim 4 or Claim 5 characterised in that the receiver (10) is positioned diametrically opposite the emitter (7) with respect to the rotational axis (0) of the ball (4).

## Patentansprüche

1. Kugelventilaufbau umfassend einen Ventilkörper (1), der einen Durchgang (2 und 3) dort hindurch für den Fluß von Medium aufweist, eine drehbar innerhalb des Körpers (1) angebrachte Kugel (4), die ausgelegt ist, den Durchgang (2 und 3) in einem geschlossenen Zustand des Ventils zu versperren, und die ein Tor (5) aufweist, das ausgelegt ist, sich in einem offenen Zustand des Ventils in Verbindung mit dem Durchgang (2 und 3) zu befinden, und einen Signalempfänger, dadurch gekennzeichnet, daß der Signalempfänger ein Ultraschallempfänger (7 oder 10) ist, der in der Lage ist, ein Ultraschallsignal aus dem Inneren des Ventilkörpers (1) zu detektieren.

2. Kugelventilaufbau nach Anspruch 1, dadurch gekennzeichnet, daß das Ultraschallsignal von Medium innerhalb des Ventilkörpers (1) erzeugt wird.

3. Kugelventilaufbau nach Anspruch 1, dadurch gekennzeichnet, daß er einen Ultraschallsender (7) umfaßt, von welchem das Ultraschallsignal ausgeht, wobei der Sender (7) mit dem Ventilkörper (1) verbunden oder diesem zugeordnet ist.

4. Kugelventilaufbau umfassend einen Ventilkörper (1), der einen Durchgang (2 und 3) dort hindurch für den Fluß von Medium aufweist, eine drehbar innerhalb des Körpers (1) angebrachte Kugel (4), die ausgelegt ist, den Durchgang in einem geschlossenen Zustand des Ventils zu versperren, und die ein Tor (5) aufweist, das ausgelegt ist, sich in einem offenen Zustand des Ventils in Verbindung mit dem Durchgang (2 und 3) zu befinden, einen mit dem Ventilkörper (1) verbundenen oder diesem zugeordneten Signalsender, der in der Lage ist, ein Signal auszusenden, welches durch das Tor (5) treten wird, wenn die Kugel (4) sich in der einen der offenen und geschlossenen Positionen befindet, aber von der Kugel (4) reflektiert werden wird, wenn die Kugel (4) sich in der anderen der offenen und geschlossenen Positionen befindet, und einen Signalempfänger, dadurch gekennzeichnet, daß der Signalsender ein Ultraschallsender (7) ist, der in der Lage ist, ein Ultraschallsignal auszusenden, und der Signalempfänger ein Ultraschallempfänger (7 oder 10) ist, der in der Lage ist, das Ultraschallsignal zu empfangen, nachdem es durch das Tor (5) getreten ist oder von der Kugel (4) reflektiert worden ist.

5. Kugelventilaufbau nach Anspruch 4, dadurch gekennzeichnet, daß der Sender und Empfänger in einer einzigen Einheit (7) untergebracht sind, die an dem Ventilkörper (1) angebracht ist.

6. Kugelventilaufbau nach Anspruch 4 oder Anspruch 5, dadurch gekennzeichnet, daß der Empfänger (10) diametral gegenüber dem Sender (7) bezüglich der Drehachse (O) der Kugel (4) positioniert ist.

## Revendications

1. Robinet à tournant sphérique comprenant un corps de robinet (1) comportant un passage (2 et 3) qui le traverse afin de permettre l'écoulement d'un fluide, une sphère (4) montée avec faculté de rotation à l'intérieur du corps (1), conçue pour obturer ledit passage (2 et 3) dans un état fermé du robinet, et comporant une ouverture (5) conçue pour être en communication avec ledit passage (2 et 3) dans un état ouvert du robinet, et un récepteur de signaux, caractérisé en ce que le récepteur de signaux est un récepteur d'ultrasons (7 ou 10) capable de détecter un signal ultra-sonore provenant de l'intérieur du corps de robinet (1).

2. Robinet à tournant sphérique selon la revendication 1, caractérisé en ce que le signal ultra-sonore est engendré par le fluide présent à l'intérieur du corps de robinet (1).

3. Robinet à tournant sphérique selon la revendication 1, caractérisé par le fait qu'il comprend un émetteur d'ultrasons (7), d'où part le signal ultra-sonore, ledit émetteur (7) étant fixé ou associé au corps de robinet (1).

4. Robinet à tournant sphérique comprenant un corps de robinet (1) comportant un passage (2 et 3) qui le traverse afin de permettre l'écoulement d'un fluide, une sphère (4) montée avec faculté de rotation à l'intérieur du corps (1), conçue pour obturer ledit passage dans un état fermé du robinet, et comportant une ouverture (5) conçue pour être en communication avec ledit passage (2 et 3) dans un état ouvert du robinet, un émetteur de signaux fixé ou associé au corps de robinet (1), capable d'émettre un signal qui passera par l'ouverture (5) lorsque la sphère (4) se trouvera dans l'une des positions ouverte et fermée, mais sera réfléchi par la sphère (4) lorsque la sphère (4) se trouvera dans l'autre des positions ouverte et fermée, et un récepteur de signaux, caractérisé en ce que l'émetteur de signaux est un émetteur d'ultrasons (7) capable d'émettre un signal ultra-sonore, et en ce que le récepteur de signaux est un récepteur d'ultrasons (7 ou 10) capable de recevoir le signal ultra-sonore après son passage par l'ouverture (5) ou après sa réflexion par la sphère (4).

5. Robinet à tournant sphérique selon la revendication 4, caractérisé en ce que l'émetteur et le récepteur sont logés dans un unique ensemble (7) fixé au corps de robinet (1).

6. Robinet à tournant sphérique selon la revendication 4 ou la revendication 5, caractérisé en ce que le récepteur (10) est positionné diamétralement à l'opposé de l'émetteur (7) par rapport à l'axe de rotation (O) de la sphère (4).
